# EUROPÄISCHE PATENTANMELDUNG

(11) **EP 4 371 674 A1**
(43) Veröffentlichungstag der Anmeldung: **22.05.2024**
(21) Anmeldenummer: 23210483.6
(22) Anmeldetag: 17.11.2023
(51) Int. Cl.: B07C 5/344, B07C 7/00, G01V 3/10, G01V 3/15

(54) **VORRICHTUNG UND VERFAHREN ZUR BESTIMMUNG METALLISCHER GEGENSTÄNDE IN EINEM MÜLLBEHÄLTER**

(30) Priorität: 17.11.2022 DE 102022130417
(71) Anmelder: Zöller-Kipper GmbH, 55130 Mainz (DE)
(72) Erfinder: Fabris, Hans-Jürgen, 72760 Reutlingen (DE)
(74) Vertreter: Regler, Markus Egid

(57) **Zusammenfassung**

Die Erfindung betrifft eine Vorrichtung (1) zur Bestimmung metallischer Gegenstände (6) in einem Müllbehälter (2) mit einer Sendespule und einer Empfangsspule, wobei die Empfangsspule einen ersten Abschnitt mit einer ersten Wicklungsrichtung und einen zweiten Abschnitt mit einer zweiten entgegengesetzten Wicklungsrichtung aufweist, dadurch gekennzeichnet, dass der erste und der zweite Abschnitt in Einbaulage vertikal übereinander angeordnet sind. Diese Vorrichtung verbessert die Bestimmung metallischer Gegenstände in einem Müllbehälter (6), da insbesondere die gesamte Breite des Müllbehälters (2) abgedeckt wird und somit die Gefahr eines Detektionsfehlers minimiert wird.

Die Erfindung betrifft zudem ein Verfahren zur Bestimmung metallischer Gegenstände (6) in einem Müllbehälter (2) mit einer solchen Vorrichtung (1) bei dem die Vorrichtung (1) in vertikaler Richtung entlang der Wand (7) des Müllbehälters (2) geführt wird.

## Beschreibung

Die Erfindung betrifft eine Vorrichtung und ein Verfahren zur Bestimmung metallischer Gegenstände in einem Müllbehälter mit den Merkmalen der Patentansprüche 1 und 10.

Eine wesentliche Voraussetzung für die Wieder- und Weiterverwertung von Abfällen ist deren ordnungsgemäße Trennung. Insbesondere sind metallische Gegenstände in biologischen Abfällen für dessen Weiterverarbeitung problematisch. Leider kommt es immer wieder zu Fehleinwürfen, so dass der Abfall nachträglich mühsam sortiert werden muss. Ein konkreter Nachweis des Verursachers des Fehleinwurfs ist dann nicht mehr möglich. Gleichermaßen spielt die Größe des fehlgeworfenen Gegenstandes eine Rolle, denn ein kleinerer metallischer Gegenstand ist eher tolerabel, als ein großer metallischer Gegenstand.

Es ist daher die Aufgabe der vorliegenden Erfindung, eine Vorrichtung und ein Verfahren zur Verfügung zu stellen, durch das störungsfrei und mit minimaler Fehlerquote ein metallischer Gegenstand in einem Müllbehälter erkannt werden kann.

Der gegenständliche Teil der Aufgabe wird gelöst durch eine Vorrichtung mit den Merkmalen von Anspruch 1. Der verfahrensmäßige Teil der Aufgabe wird gelöst mit einem Verfahren mit den Merkmalen von Anspruch 11. Zweckmäßige Ausgestaltungen der Erfindung sind Gegenstand der jeweiligen abhängigen Ansprüche.

Die Erfindung betrifft eine Vorrichtung zur Bestimmung metallischer Gegenstände in einem Müllbehälter mit einer Sendespule und einer Empfangsspule, wobei die Empfangsspule einen ersten Abschnitt mit einer ersten Wicklungsrichtung und einen zweiten Abschnitt mit einer zweiten entgegengesetzten Wicklungsrichtung aufweist, wobei der erste und der zweite Abschnitt in Einbaulage vertikal übereinander angeordnet sind.

Bei einem Stromfluss durch die Sendespule wird ein Magnetfeld erzeugt. In einem metallischen, leitenden Gegenstand im Bereich dieses Feldes wird ein elektrischer Wirbelstrom induziert, der seinerseits ein Magnetfeld erzeugt. Dieses Magnetfeld bewirkt wiederum einen elektrischen Strom in den Abschnitten der Empfangsspule, der als Messignal ausgewertet werden kann.

Bevorzugt ist die Empfangsspule als eine Spule ausgestaltet, deren beide Abschnitte unterschiedliche Wickelrichtung des Drahtes aufweisen. Es ist aber auch möglich die Empfangsspule aus zwei Einzelspulen mit jeweils entgegengesetzten Wicklungsrichtungen zu verschalten. Die Spulenabschnitte sind im Wesentlichen symmetrisch in ihren Abmessungen, Anzahl der Wicklungen etc.

Jedem der beiden Abschnitte der ersten Empfangsspule kann ein Detektionsbereich zugeordnet werden, innerhalb dessen ein metallischer Gegenstand detektiert werden kann. Ein Gegenstand, der sich in beiden Detektionsbereichen befindet, erzeugt in beiden Abschnitten einen Strom, wobei wegen der entgegengesetzte Wicklungsrichtung auch die jeweilige Flussrichtung der erzeugten Ströme entgegengesetzt ist. Beide Ströme bilden einen resultierenden Gesamtstrom. Befinden sich Gegenstände symmetrisch in beiden Detektionsbereichen, summieren sich die erzeugten Ströme zu Null. Das bedeutet, dass beispielsweise metallische Bauteile des Abfallsammelfahrzeugs, etwa eines Hubwagens oder des Aufbaus, die sich insbesondere in Fahrzeughochrichtung erstrecken, dann kein Messsignal erzeugen und somit auch keine Fehlmessung erzeugen.

Der gesamte Detektionsbereich der beiden Abschnitte der Empfängerspule ist in seiner Empfindlichkeit nicht homogen. Insbesondere im Übergangsbereich zwischen den Abschnitten ist die Empfangsspule sehr unempfindlich. Das hat Nachteile, wenn die beiden Abschnitte der Empfangsspule horizontal nebeneinander angeordnet werden. Denn besonders kleinere Müllbehälter können am Kamm einer Hub-Kipp-Vorrichtung an unterschiedlichen Positionen in der Horizontalen aufgenommen werden. Durch die vertikale Anordnung der beiden Spulenabschnitte übereinander wird sichergestellt, dass nicht dadurch ein metallischer Gegenstand nicht detektiert wird, weil er sich durch das Einhängen der Tonne im Unempfindlichkeitsbereich der Empfangsspule befindet, da der Detektionsbereich der Empfangsspule die gesamte Breite des Müllbehälters abdeckt.

Vorzugsweise ist daher die Signalstärke unabhängig von der horizontalen Position des Behälters vor der Empfangsspule.

Die Vorrichtung ist zudem vorzugsweise in einer Abschirmung, beispielsweise einem Metallkäfig, angeordnet, die nur in Richtung zu dem zu überprüfenden Müllbehälter offen ist, also keine Wand aufweist. Dadurch wird der störende Einfluss von Metallbauteilen des Abfallsammelfahrzeugs minimiert.

Eine besondere Ausgestaltung der Erfindung sieht vor, dass die Vorrichtung zur Bestimmung metallischer Gegenstände in einer vertikalen Richtung entlang der Wand eines Müllbehälters verfahrbar ist. Dadurch wird die Detektionssicherheit der Vorrichtung auch in vertikaler Richtung, also in Hochrichtung des Abfallsammelfahrzeugs, verbessert. Denn je nach Lage des zu detektierenden Gegenstandes in dem Müllbehälter, kann sich dieser auch im Unempfindlichkeitsbereich zwischen den vertikal übereinander angeordneten Abschnitten der Empfangsspule befinden. Durch das Verfahren der Vorrichtung in vertikaler Richtung kann ein solcher Gegenstand in den Detektionsbereich der Empfangsspule wandern und erfasst werden. Das vertikale Verfahren der Vorrichtung kann über einen an einem Abfallsammelfahrzeug angeordneten Manipulator erfolgen oder durch manuelle Handhabung der Vorrichtung. Alternativ ist es auch möglich, die Vorrichtung an einer Hub-Kippvorrichtung des Abfallsammelfahrzeugs anzuordnen, so dass beim Ergreifen des Müllbehälters durch die Hub-Kippvorrichtung die Vorrichtung in vertikaler Richtung entlang der Wand des Müllbehälters verfahren wird.

Metallobjekte im Müllbehälter erzeugen charakteristische Signalverläufe, aus denen sich unter anderem Art, Größe und Menge der Metallobjekte errechnen lassen.

Eine weitere bevorzugte Ausgestaltung der Erfindung sieht vor, dass eine Recheneinheit vorgesehen ist, um Signale der Empfangsspule zu verarbeiten und/oder in einem Speicher abzulegen. Basierend auf den Signalen der Empfangsspule können unmittelbar Folgeschritte eingeleitet werden. Beispielsweise kann der Entleervorgang bei der Detektion eines unerwünschten metallischen Gegenstands abgebrochen werden. Dies erfolgt auf Basis der Verarbeitung oder Auswertung der Signale der Empfangsspule. Gleichermaßen können diese Informationen gespeichert werden, um sie später auswerten zu können, etwa um die Häufigkeit von Fehleinwürfen in einem bestimmten Sammelgebiet zu analysieren oder nachträglich Gebühren für Fehleinwürfe in Rechnung zu stellen.

Weiterhin bevorzugt ist vorgesehen, dass die Recheneinheit eingerichtet ist, um Signale der Empfangsspule während des Verfahrens zeitaufgelöst auszuwerten. Dies hat den technischen Effekt, dass beispielsweise durch die Analyse der Signalstärke Informationen über die Position eines metallischen Gegenstands in der Tonne gewonnen werden können, insbesondere über die vertikale Position in der Tonne.

Bevorzugt ist weiterhin, dass die Recheneinheit eingerichtet ist, um die zeitliche Änderung der Signalstärke, insbesondere die Geschwindigkeit der zeitlichen Änderung der Signalstärke, auszuwerten. Prinzipiell lässt die zeitliche Änderung der Signalstärke Rückschlüsse auf die Größe der metallischen Gegenstände zu, da bei gleichem Abstand zum Detektor ein großer Gegenstand ein stärkeres Signal erzeugt als ein kleinerer Gegenstand. Wird zudem die Geschwindigkeit der Änderung des Signals bestimmt, also die Steigung der Signalkurve, so ermöglicht dies eine Differenzierung der Größe der metallischen Gegenstände unabhängig von deren Abstand zum Detektor, da die Form der Signalkurve sowohl von der Größe des Gegenstands als auch von dessen Abstand zum Detektor abhängt.

Da es die zeitliche Änderung des Signals ermöglicht, hier eine Unterscheidung vorzunehmen, ist die Recheneinheit besonders bevorzugt eingerichtet ist, um aus der Auswertung der Signale auf die Größe des metallischen Gegenstandes zu schließen.

Dadurch ist es möglich, Folgeschritte abhängig von der Größe der Gegenstände einzuleiten. Beispielsweise kann das Gesamtsystem so eingestellt werden, dass Gegenstände unter einer Mindestgröße ignoriert werden oder Strafgebühren in Abhängigkeit der Größe der Gegenstände verhängt werden.

In einer weiteren Ausgestaltung der Erfindung ist vorgesehen, dass zumindest die Sendespule und die Empfangsspule an oder in dem Hubwagen eines Abfallsammelfahrzeuges anbringbar ist. Dadurch befindet sich der für die Messung selbst wesentliche Teil der Vorrichtung automatisch in der Nähe des Müllbehälters. Insbesondere ist es möglich, das Verfahren der Vorrichtung in vertikaler Richtung entlang der Wand des Müllbehälters automatisch beim Aufnehmen des Müllbehälters durch den Hubwagen vorzunehmen, was zeitliche Vorteile mit sich bringt.

Es ist dabei grundsätzlich nicht notwendig, dass eine erfindungsgemäße Recheneinheit oder eine Steuerung ebenfalls am Hubwagen angeordnet ist. Diese können auch räumlich getrennt von Sendespule und Empfangsspule an einem Abfallsammelfahrzeug angeordnet sein.

Bevorzugt sind eine zweite Sendespule und eine zweite Empfangsspule vorgesehen, wobei der erste und der zweite Abschnitt der zweiten Empfangsspule in Einbaulage horizontal nebeneinander angeordnet sind. Auch hier können den Abschnitten der zweiten Empfangsspule jeweils Detektionsbereiche analog zu der ersten Empfangsspule zugeordnet werden. In einer derartigen Konfiguration erstreckt sich der unempfindliche Bereich zwischen den beiden Abschnitten der zweiten Empfangsspule in vertikaler Richtung und auch die Detektionsbereiche der zweiten Empfangsspule erstreckt sich in Hochrichtung des Müllbehälters. Durch den Einsatz einer derartigen zweiten Empfangsspule kann der Unempfindlichkeitsbereich der ersten Empfangsspule größtenteils abgedeckt werden. Außerdem können Störeffekte minimiert werden, die bei der Entleerung von Müllbehältern mit integrierten, metallischen Bodengittern oder durch Kanaldeckel auftreten, weil diese Gegenstände durch die Detektionsbereiche der zweiten Empfangsspule im Wesentlichen symmetrisch erfasst werden und damit keinen resultierenden Strom liefern. Durch geeignete Schaltung der beiden Empfangsspulen, kann dieser Störfaktor eliminiert werden.

Alternativ wäre es möglich, den Detektionsbereich der ersten Empfangsspule so zu konfigurieren, dass diese Gegenstände nicht erfasst werden.

Besonders bevorzugt sind die zweite Sendespule und die zweite Empfangsspule zusätzlich zu der ersten Sendespule und der ersten Empfangsspule zur Bestimmung metallischer Gegenstände einsetzbar. Das bedeutet, dass beide Spulenkonfigurationen gleichzeitig zur Detektion eingesetzt werden. Insbesondere die zweite Empfangsspule ist dann so angeordnet, dass ihre Detektionsbereiche den Unempfindlichkeitsbereich der ersten Empfangsspule überdecken. Dann verbleibt in der Überschneidung der beiden Unempfindlichkeitsbereiche lediglich ein in der Praxis vernachlässigbar kleiner Bereich, in dem metallische Gegenstände nicht erfasst werden können. Damit wird die Empfindlichkeit der Vorrichtung weiter verbessert.

Es ist auch möglich, sowohl die ersten als auch die zweiten Empfangsspulen so zu verschalten, dass abhängig von dem Abschnitt der Empfangsspule, der ein Signal erzeugt, ein positiver oder ein negativer Messwert ausgegeben wird. Das kann beispielsweise ein Zahlenwert von -100 bis +100 sein. Damit ist es möglich die konkrete Position eines metallischen Gegenstandes noch genauer zu erfassen. Wenn sowohl eine erste als auch eine zweite Empfangsspule eingesetzt werden, wird die Positionsbestimmung zusätzlich verbessert. Zudem können mit diesem Mittel störende metallische Gegenstände wie Kanaldeckel, Metallgitter in einem Müllbehälter oder ein benachbarter Hubwagen noch besser eliminiert werden, etwa rechnerisch bereits bei der Auswertung.

In einer weiteren Ausgestaltung der Erfindung ist vorgesehen, dass die Sendespule und die Empfangsspule dazu eingerichtet sind, ein erstes Signal in einem ersten Frequenzbereich und/oder mit einer ersten Amplitudenmodulation und zumindest ein zweites Signal in einem zweiten Frequenzbereich und/oder mit einer zweiten Amplitudenmodulation zu senden beziehungsweise zu empfangen, insbesondere ist das zweite Signal in dem zweiten Frequenzbereich eine Oberwelle des ersten Signals in dem ersten Frequenzbereich.

Der erste Frequenzbereich liegt vorzugsweise im Bereich der Niederfrequenz, besonders bevorzugt in einem Bereich zwischen 0,5 Kilohertz und 3 Kilohertz. Der zweite Frequenzbereich liegt vorzugsweise im Bereich der Radiowellen oder Mikrowellen, besonders bevorzugt in einem Bereich zwischen 125 Kilohertz und 2 Gigahertz.

Gleiches kann auch für die zweite Sendespule und die zweite Empfangsspule vorgesehen sein.

Die Bestimmung metallischer Gegenstände in dem Müllbehälter erfolgt über ein erstes Signal, das in dem ersten Frequenzbereich verortet ist. Das heißt, dass dieses Signal vorzugsweise eine Frequenz im Bereich der Niederfrequenz aufweist. Zusätzlich kann ein zweites Signal gesendet beziehungsweise empfangen werden, das in einem zweiten Frequenzbereich verortet ist und/oder eine andere Amplitudenmodulation aufweist. Dadurch erhält man in der Empfangsspule zwei unterscheidbare Signale, die unabhängig voneinander ausgewertet werden können.

Das Signal aus dem zweiten Frequenzbereich kann dazu genutzt werden neben der Bestimmung metallischer Gegenstände weitere Eigenschaften des Müllbehälters auszuwerten. Insbesondere kann damit ein RFID-Chip des Müllbehälters ausgelesen werden. Es muss dafür folglich keine separate Vorrichtung mehr vorgesehen werden.

Vorzugsweise wird als zweites Signal eine Oberwelle des ersten Signals genutzt. Da Oberwellen auf natürliche Weise entstehen, bringt dies den Vorteil mit sich, dass keine zusätzlichen Komponenten oder Geräte vorgesehen werden müssen.

Weiterhin betrifft die Erfindung ein Verfahren mit einer Vorrichtung wie vorstehend beschrieben, bei dem die Vorrichtung in vertikaler Richtung entlang der Wand des Müllbehälters geführt wird. Den beiden Abschnitten der Empfängerspule kann jeweils ein Detektionsbereich zugeordnet werden, innerhalb dessen metallische Gegenstände detektiert werden können. Im Übergangsbereich zwischen den Abschnitten ist die Empfangsspule sehr unempfindlich. Das bedeutet, dass je nach Lage eines metallischen Gegenstandes in einem Müllbehälter dieser möglicherweise nicht korrekt erfasst wird, weil er sich gerade in oder nahe bei dem Unempfindlichkeitsbereich der Empfangsspule befindet. Durch das Verfahren in vertikaler Richtung wird die Detektionssicherheit der Vorrichtung auch in vertikaler Richtung, also in Hochrichtung des Abfallsammelfahrzeugs, verbessert. Die Vorrichtung wird an dem Gegenstand vorbeigeführt, so dass dieser in den Empfangsbereich der Empfangsspule wandert und erfasst werden kann. Das vertikale Verfahren der Vorrichtung kann über einen an einem Abfallsammelfahrzeug angeordneten Manipulator erfolgen oder durch manuelle Handhabung der Vorrichtung.

Vorzugsweise ist die Vorrichtung an einem Hubwagen eines Abfallsammelfahrzeugs angeordnet und wird durch die Bewegung des Hubwagens beim Aufnehmen eines Müllbehälters entlang der Wand des Müllbehälters geführt. Dabei wird die ohnehin vorgenommene Bewegung des Hubwagens ausgenutzt und das Verfahren somit zeiteffizient umgesetzt.

Eine weitere vorteilhafte Ausgestaltung des Verfahrens sieht vor, dass ein Signal der Empfangsspule durch eine Recheneinheit zeitaufgelöst ausgewertet wird. Durch die Analyse der Signalstärke können Informationen über die Position eines metallischen Gegenstands in der Tonne gewonnen werden können, insbesondere über die vertikale Position in der Tonne.

Weiterhin ist bevorzugt vorgesehen, dass die zeitliche Änderung der Signalstärke, insbesondere die Geschwindigkeit der zeitlichen Änderung der Signalstärke, ausgewertet wird. Prinzipiell lässt die zeitliche Änderung der Signalstärke Rückschlüsse auf die Größe der metallischen Gegenstände zu, da bei gleichem Abstand zum Detektor ein großer Gegenstand ein stärkeres Signal erzeugt als ein kleinerer Gegenstand. Wird zudem die Geschwindigkeit der Änderung des Signals bestimmt, also die Steigung der Signalkurve, so ermöglicht dies eine Differenzierung der Größe der metallischen Gegenstände unabhängig von deren Abstand zum Detektor. Da die Form der Signalkurve sowohl von der Größe des Gegenstands als auch von dessen Abstand zum Detektor abhängt.

Da es die zeitliche Änderung des Signals ermöglicht, hier eine Unterscheidung vorzunehmen, wird besonders bevorzugt aus der Auswertung der Signale die Größe des metallischen Gegenstandes bestimmt.

In einer weiteren bevorzugten Ausgestaltung der Erfindung werden Signale der Empfangsspule mit Eintreten eines vorbestimmten Ereignisses beginnend von diesem Ereignis über einen vorbestimmten Zeitraum rückwärts ausgewertet.

Ein vorbestimmtes Ereignis kann beispielsweise das Eingreifen der Kammaufnahme eines Abfallsammelfahrzeuges in die korrespondierenden Taschen eines Müllbehälters sein, was durch Betätigen eines Quittungsschalters an der Kammaufnahme erkannt wird. Die Signale der Empfangsspule werden während des Heranführens des Müllbehälters an die Kammaufnahme und während der Bewegung des Hubwagens beim Aufnehmen des Müllbehälters gemessen. Sobald das Quittungssignal erkannt wird, wird die Messung gestoppt und die Signale der Empfangsspule werden über einen vorbestimmten Zeitraum von dem Zeitpunkt des Quittungssignals aus betrachtet rückwärts ausgewertet.

Weiterhin bevorzugt ist das Verfahren so ausgestaltet, dass die Signale der Empfangsspule von Störsignalen bereinigt werden. In den Detektionsbereich der Empfangsspule geratende metallische Gegenstände wie Kanaldeckel, Metallgitter in einem Müllbehälter oder ein benachbarter Hubwagen können Störsignale erzeugen, die das Messergebnis verfälschen. Diese können auf verschiedene Weisen berücksichtigt und eliminiert werden.

Besonders bevorzugt werden charakteristische Störsignale bestimmt und die Signale der Empfangsspulen werden durch Vergleich mit charakteristischen Störsignalen bereinigt. Hierbei werden Störsignale unterschiedlicher Quellen unabhängig von der Entleerung eines Müllbehälters gemessen. Diese Störsignale sind für die jeweilige Quelle charakteristisch und können in einem Speicher hinterlegt werden. Bei der Auswertung der Signale der Empfangsspule werden diese mit den hinterlegten charakteristischen Störsignalen verglichen und letztere werden gegebenenfalls identifiziert und eliminiert oder bei der weiteren Auswertung nicht beachtet. Vorzugsweise wird diese Vergleich automatisiert, insbesondere mit Unterstützung von Künstlicher Intelligenz, durchgeführt.

Ein benachbarter Hubwagen beispielsweise erzeugt durch seine Aufwärts- und Abwärtsbewegung beim Entleeren eines Müllbehälters einen charakteristischen, im Wesentlichen sinusförmigen Signalverlauf in der Empfangsspule, in jedem Fall einen positiven Signalverlauf in einem Abschnitt der Empfangsspule und einen negativen Signalverlauf in dem anderen Abschnitt der Empfangsspule. Der zeitliche Verlauf des Störsignals ist von der Relativgeschwindigkeit des Hubwagens zur Vorrichtung, die Höhe des Störsignals von der Relativposition abhängig. Es ist daher vorteilhaft, mehrere Vergleichssignale mit unterschiedlichen Randbedingungen zu detektieren und zu hinterlegen. Wird bei der Auswertung der Signale der Empfangsspule ein solches charakteristisches Störsignal erkannt, kann es bei der Auswertung entsprechend berücksichtigt werden.

Weiterhin besonders bevorzugt werden Signale der Empfangsspule durch Vergleich mit Messwerten weiterer Detektoren bereinigt.

Beispielsweise ist es möglich die Messwerte weiterer Detektoren, die an einem Abfallsammelfahrzeug vorgesehen sind, zu verwenden, um Störsignale zu identifizieren. Dazu gehören Kameras, Ultraschall-, Radar- oder Lidarsensoren oder auch Positionsdetektoren, wie Drehwinkelgeber. Die Messwerte dieser Detektoren können zeitlich mit den Signalen der Empfangsspule korreliert werden und auf diese Weise können Störsignale identifiziert und eliminiert werden.

Beispielsweise kann die aktuelle Position und Geschwindigkeit eines benachbarten Hubwagens über Drehwinkelgeber in der Mechanik des Hubwagens bestimmt werden. Diese Messwerte werden mit den Signalen der Empfangsspule verglichen. Ein Signalverlauf, der zeitlich mit den Messwerten des Drehwinkelgebers übereinstimmt, die eine Bewegung des Hubwagens abbilden, kann diesem zugeordnet werden und bei der Auswertung herausgerechnet oder ignoriert werden.

Mit Hilfe einer Kamera am Aufbau des Abfallsammelfahrzeugs kann beispielsweise ein Kanaldeckel in der Nähe der erfindungsgemäßen Vorrichtung erkannt werden und mit einem diesbezügliche Störsignal in Verbindung gebracht werden.

Weiterhin besonders bevorzugt werden der erste Abschnitt und der zweite Abschnitt der Empfangsspule unabhängig voneinander ausgewertet. Diese Ausführung der Erfindung bietet sich an, wenn ein Störkörper maßgeblich Einfluss auf nur einen der beiden Abschnitte der Empfangsspule hat, wie es beispielsweise bei einem Kanaldeckel oder bei einem Metallgitter im Boden des Müllbehälters der Fall ist. Das entsprechende Signal tritt dann nur in dem in Einbaulage unten angeordneten Abschnitt der Empfangsspule auf und kann entsprechend berücksichtigt werden.

Die vorstehend beschriebenen Bereinigungsschritte für die Signale der Empfangsspule können natürlich ebenfalls automatisiert und insbesondere mit Unterstützung von Künstlicher Intelligenz ausgeführt werden.

Ebenso können der Vergleich der Signale der Eingangsspule mit charakteristischen Störsignalen und mit Meswerten weiterer Detektoren kombiniert werden.

Im Zusammenhang mit den verfahrenstechnischen Aspekten der Erfindung wird auch auf die Ausführungen zu den entsprechenden gegenständlichen Merkmalen der Erfindung verwiesen.

Es zeigen
- Figur 1: eine erfindungsgemäße Vorrichtung in Seitenansicht,
- Figur 2: eine erfindungsgemäße Vorrichtung in Draufsicht.

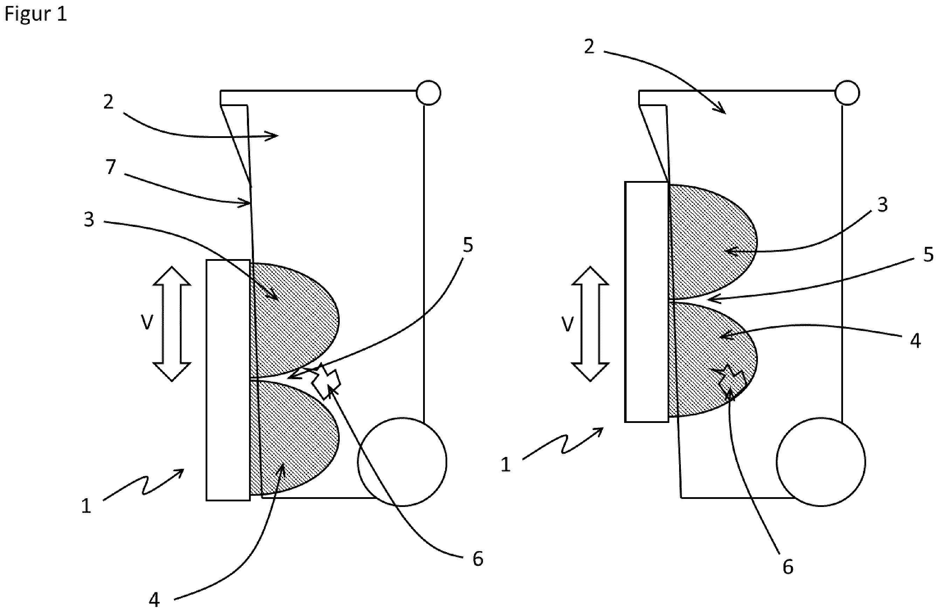

In Figur 1 ist schematisch eine erfindungsgemäße Vorrichtung 1 zur Bestimmung metallischer Gegenstände 6 in einem Müllbehälter 2 dargestellt. Die Vorrichtung 1 weist eine Sendespule und eine Empfangsspule (beide nicht näher dargestellt) auf. Die Empfangsspule weist einen ersten Abschnitt mit einer ersten Wicklungsrichtung und einen zweiten Abschnitt mit einer zweiten entgegengesetzten Wicklungsrichtung auf, wobei der erste und der zweite Abschnitt in Einbaulage vertikal übereinander angeordnet sind.

Das führt dazu, dass den beiden Abschnitten jeweils ein Detektionsbereich 3, 4 zugeordnet werden kann. Die Detektionsbereiche 3, 4 sind folglich ebenfalls vertikal übereinander angeordnet. Die Detektionsbereiche 3, 4 sind so konfiguriert, dass diese zumindest bereichsweise den Innenraum des Müllbehälters 2 abdecken, um dort vorhandene metallische Gegenstände 6 zu bestimmen.

Die Detektionsbereiche 3, 4 der Empfangsspule sind inhomogen. Insbesondere im Übergangsbereich zwischen dem ersten Abschnitt und dem zweiten Abschnitt, respektive zwischen dem ersten Detektionsbereich 3 und den zweiten Detektionsbereich 4 liegt ein Unempfindlichkeitsbereich 5, der aus der Geometrie der Empfangsspule resultiert.

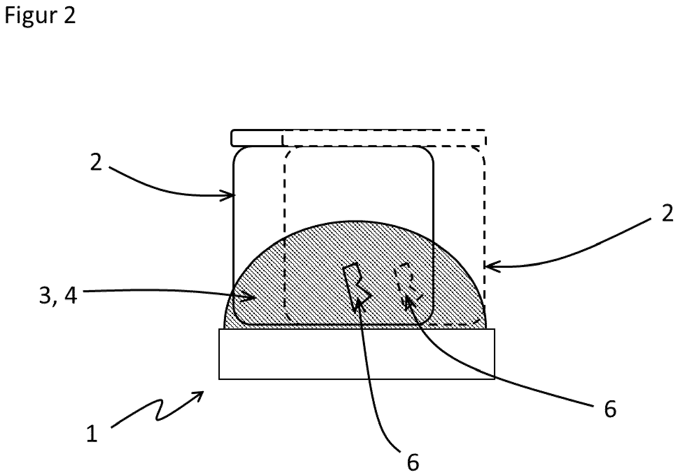

Ein metallischer Gegenstand 6 der sich im Unempfindlichkeitsbereich 5 befindet wird zunächst nicht detektiert (Figur 1 links). Durch ein Verfahren der Vorrichtung 1 in einer vertikalen Richtung V entlang der Wand 7 des Müllbehälters 2 wandert der metallische Gegenstand 6 in den zweiten Detektionsbereich 4 (Figur 2 rechts). Damit kann die Inhomogenität der Detektionsbereiche 3, 4 kompensiert und sichergestellt werden, dass alle metallischen Gegenstände 6 erfasst werden. Hierbei kann noch nach deren Größe differenziert werden, so dass metallische Gegenstände 6 unter einer bestimmten Größe ignoriert werden.

Das Verfahren kann in einfacher Weise ermöglicht werden, indem die Vorrichtung 1 oder zumindest die Sende- und Empfangsspule an einem Hubwagen eines Müllfahrzeuges angeordnet werden. Beim Aufnehmen des Müllbehälters 2 bewegt sich der Hubwagen ohnehin in vertikaler Richtung entlang der Wand 7 des Müllbehälters 2, um mit einer Kamm- oder Diamondaufnahme in die korrespondierenden Taschen des Müllbehälters einzugreifen. Diese Bewegung kann für die Messung benutzt werden, was zu einer Zeitersparnis führt.

Wie in Figur 2 in der Draufsicht deutlich wird, erfassen die in dieser Perspektive üblicherweise deckungsgleichen Detektionsbereiche 3, 4 einen Müllbehälter über seine gesamte Breite. Genauer erstrecken sich die Detektionsbereiche 3, 4 in Fahrzeugquerrichtung vorzugsweise über die gesamte Breite einer Aufnahme, etwa einer Kammaufnahme, des Abfallsammelfahrzeugs. Kleinere Müllbehälter 2 können in der Horizontalen an unterschiedlichen Positionen an der Kammaufnahme angeordnet werden. In der Figur 2 ist dies durch durchgezogene und gestrichelte Linien angedeutet. Durch die Erstreckung der Detektionsbereiche 3, 4 über die gesamte Breite der Kammaufnahme, werden dennoch metallische Gegenstände 6 erfasst, unabhängig davon, an welcher Stelle der Kammaufnahme der Müllbehälter 2 eingehängt ist.

Mittels einer hier nicht näher dargestellten Recheneinheit können die in der Empfangsspule erzeugten Ströme beziehungsweise Messsignale verarbeitet und/oder in einem Speicher abgelegt werden. Durch eine geeignete Auswertung von Form und Amplitude des Messignals ist es möglich, Rückschlüsse auf die Größe der metallischen Gegenstände 6 zu ziehen.

Eine erfindungsgemäße Vorrichtung 1 führt zu einer verbesserten Erkennung metallischer Gegenstände 6 in einem Müllbehälter, die zudem sehr zeiteffizient erfolgt.

### Bezugszeichen

- 1: Vorrichtung
- 2: Müllbehälter
- 3: erster Detektionsbereich
- 4: zweiter Detektionsbereich
- 5: Unempfindlichkeitsbereich
- 6: metallischer Gegenstand
- 7: Wand von 2
- V: vertikale Richtung

## Patentansprüche

1. Vorrichtung (1) zur Bestimmung metallischer Gegenstände (6) in einem Müllbehälter (2) mit einer Sendespule und einer Empfangsspule, wobei die Empfangsspule einen ersten Abschnitt mit einer ersten Wicklungsrichtung und einen zweiten Abschnitt mit einer zweiten entgegengesetzten Wicklungsrichtung aufweist, **dadurch gekennzeichnet, dass** der erste und der zweite Abschnitt in Einbaulage vertikal übereinander angeordnet sind.

2. Vorrichtung (1) nach Anspruch 1 **dadurch gekennzeichnet, dass** die Vorrichtung (1) zur Bestimmung metallischer Gegenstände (6) in einer vertikalen Richtung entlang der Wand (7) eines Müllbehälters (2) verfahrbar ist.

3. Vorrichtung (1) nach Anspruch 1 oder 2 **dadurch gekennzeichnet, dass** eine Recheneinheit vorgesehen ist, um Signale der Empfangsspule zu verarbeiten und/oder in einem Speicher abzulegen.

4. Vorrichtung (1) nach Anspruch 3 **dadurch gekennzeichnet, dass** die Recheneinheit eingerichtet ist, um Signale der Empfangsspule während des Verfahrens zeitaufgelöst auszuwerten.

5. Vorrichtung (1) nach Anspruch 4 **dadurch gekennzeichnet, dass** die Recheneinheit eingerichtet ist, um die zeitliche Änderung der Signalstärke, insbesondere die Geschwindigkeit der zeitlichen Änderung der Signalstärke, auszuwerten.

6. Vorrichtung (1) nach Anspruch 5 **dadurch gekennzeichnet, dass** die Recheneinheit eingerichtet ist, um aus der Auswertung der Signale auf die Größe des metallischen Gegenstandes (6) zu schließen.

7. Vorrichtung (1) nach einem der vorstehenden Ansprüche **dadurch gekennzeichnet, dass** zumindest die Sendespule und die Empfangsspule an oder in dem Hubwagen eines Abfallsammelfahrzeuges anbringbar ist.

8. Vorrichtung (1) nach einem der vorstehenden Ansprüche **dadurch gekennzeichnet, dass** eine zweite Sendespule und eine zweite Empfangsspule vorgesehen sind, wobei der erste und der zweite Abschnitt der zweiten Empfangsspule in Einbaulage horizontal nebeneinander angeordnet sind.

9. Vorrichtung (1) nach Anspruch 8 **dadurch gekennzeichnet, dass** die zweite Sendespule und die zweite Empfangsspule zusätzlich zu der ersten Sendespule und der ersten Empfangsspule zur Bestimmung metallischer Gegenstände (6) einsetzbar sind.

10. Vorrichtung (1) nach zumindest einem der vorstehenden Ansprüche **dadurch gekennzeichnet, dass** die Sendespule und die Empfangsspule dazu eingerichtet sind, ein erstes Signal in einem ersten Frequenzbereich und/oder mit einer ersten Amplitudenmodulation und zumindest ein zweites Signal in einem zweiten Frequenzbereich und/oder mit einer zweiten Amplitudenmodulation zu senden beziehungsweise zu empfangen, insbesondere ist das zweite Signal in dem zweiten Frequenzbereich eine Oberwelle des ersten Signals in dem ersten Frequenzbereich.

11. Verfahren zur Bestimmung metallischer Gegenstände (6) in einem Müllbehälter (2) mit einer Vorrichtung (1) nach einem der Ansprüche 1 bis 10, bei dem die Vorrichtung (1) in vertikaler Richtung entlang der Wand (7) des Müllbehälters (2) geführt wird.

12. Verfahren nach Anspruch 11 **dadurch gekennzeichnet, dass** die Vorrichtung (1) an einem Hubwagen eines Abfallsammelfahrzeugs angeordnet ist und durch die Bewegung des Hubwagens beim Aufnehmen eines Müllbehälters (2) entlang der Wand (7) des Müllbehälters (2) geführt wird.

13. Verfahren nach Anspruch 11 oder 12 **dadurch gekennzeichnet, dass** ein Signal der Empfangsspule durch eine Recheneinheit zeitaufgelöst ausgewertet wird.

14. Verfahren nach Anspruch 13 **dadurch gekennzeichnet, dass** die zeitliche Änderung der Signalstärke, insbesondere die Geschwindigkeit der zeitlichen Änderung der Signalstärke, ausgewertet wird.

15. Verfahren nach Anspruch 14 **dadurch gekennzeichnet, dass** aus der Auswertung der Signale die Größe des metallischen Gegenstandes (6) bestimmt wird.

16. Verfahren nach zumindest einem der Ansprüche 13 bis 15 **dadurch gekennzeichnet, dass** Signale der Empfangsspule mit Eintreten eines vorbestimmten Ereignisses beginnend von diesem Ereignis über einen vorbestimmten Zeitraum rückwärts ausgewertet werden.

17. Verfahren nach zumindest einem der Ansprüche 11 bis 16 **dadurch gekennzeichnet, dass** Signale der Empfangsspule von Störsignalen bereinigt werden.
